# EUROPEAN PATENT SPECIFICATION

(11) **EP 1 488 908 B1**
(45) Date of publication and mention of the grant of the patent: **04.01.2012**
(21) Application number: 03715624.7
(22) Date of filing: 28.03.2003
(51) Int. Cl.: B29C 47/02, F16J 15/14, B29C 39/10, G11B 33/02, G11B 33/12, G11B 25/04, F16J 15/10

(54) **METHOD OF MANUFACTURING GASKET FOR HARD DISK DEVICE AND GASKET**
VERFAHREN ZUR HERSTELLUNG EINER DICHTUNG FÜR FESTPLATTENLAUFWERK UND DICHTUNG
PROCEDE DE FABRICATION DE JOINT POUR DISPOSITIF DE DISQUE DUR ET JOINT

(30) Priority: 28.03.2002 JP 2002091083; 28.03.2002 JP 2002091084
(43) Date of publication of application: 22.12.2004
(73) Proprietor: Bridgestone Corporation, Tokyo 104-8340 (JP)
(72) Inventor: UTSUNOMIYA, Tadashi, Kamakura-shi, Kanagawa 248-0006 (JP); OGATA, Tomohiro, Yokohama-shi, Kanagawa 244-0812 (JP); SAITO, Youkou, Yokohama-shi, Kanagawa 244-0815 (JP); MASHITA, Naruhiko, Yokohama-shi, Kanagawa 244-0003 (JP); HIRAIWA, T.; c/o Bridgestone Corporation, Yokohama-shi, Kanagawa 244-8510 (JP)
(74) Representative: Whalley, Kevin
(86) International application number: PCT/JP2003/004041
(87) International publication number: WO 2003/086736

(56) References cited:
- EP-A- 1 041 130
- EP-A1- 0 568 014
- FR-A- 2 783 588
- JP-A- 2001 004 030
- JP-A- 2001 182 836
- JP-A- 2001 225 392
- JP-A- 2003 105 320
- JP-A- 2003 120 819
- JP-U- 5 086 198
- US-A- 4 093 692
- US-A- 5 731 541
- US-A- 5 910 524

## Description

### TECHNICAL FIELD

The present invention relates to a process for producing a gasket for hard disc equipment and a gasket, and more particularly to a process for producing a gasket for hard disc equipment which serves for hermetically sealing a joint surface between a cover body and a main body of the hard disc equipment without not only using a mold but also requiring blanking of sheets and any bonding processes, and a gasket for small-size hard disc equipment.

### BACKGROUND ARTS

In recent years, in the hard disc equipment for computers, there is an increasing tendency toward high performance and reduction in size, thereby rendering a circuit structure thereof more complicated. As a result, since even a trace amount of dusts tends to cause failure in operation of the hard disc equipment, it has been required upon practical used to take any suitable dust-proofing measure. In general, gaskets are used for preventing dusts from entering into the equipment.

Conventionally, the gasket for the hard disc equipment (hereinafter referred to merely as "HDD gasket") has been manufactured by (1) the method of bonding a gasket produced by blanking an urethane foam sheet or a solid rubber sheet to a cover plate; (2) the method of transfer-molding or injection-molding a solid rubber on both surfaces of a cover plate in the form of a bridged configuration to integrate the rubber with the cover plate; (3) the dispensing method of extruding a molten resin or a solution-like resin on a surface of a cover plate into a gasket shape by one stroke using a dispenser to thereby integrate the extruded resin with the cover plate; or (4) the method of injection-molding a thermoplastic elastomer blended with an adhesive resin on a surface of a cover plate to integrate the elastomer with the cover plate.

Among these methods, the dispensing method has advantages such as (1) a prolonged lead time up to production as well as no need of a mold requiring initial costs, and (2) no need of additional steps such as bonding step because the method enables direct formation of the gasket on a cover plate. The dispensing method has been extensively used in various industrial application fields. In the field of the HDD gaskets, the dispensing method has been already applied to production of gaskets for large-scale equipment such as 3,5-inch (88.9 mm) HDDs. Most of the 3.5-inch HDD gaskets have been currently produced by the dispensing method.

On the other hand, with the progress of techniques for reduction in size of HDDs, 2.5-inch (63.5 mm) HDDs tend to be used as leading products thereof, and still smaller HDDs having a size of 1.8 inch and even 1 inch have also been produced and put into the market. HDD gaskets used in these small-size HDDs are also required to have a narrower line width and a larger height, i.e., a wall-like shape.

However, in the above dispensing method, since the gasket material is extruded from the dispenser and formed into a gasket shape by one stroke, the resultant gasket tends to be collapsed into a broken semi-circular shape in cross section due to its own weight. For this reason, it has been difficult to form a gasket having a narrow line width and a large height by the dispensing method. Further, the dispensing method as a current leading method for producing 3.5-inch HDD gaskets cannot be applied to production of 2.5-inch or smaller HDD gaskets since this method fails to attain a high accuracy in line width and height thereof. Actually, such small-size HDD gaskets produced by the dispensing method have not been marketed yet.

Dispensing methods cam also be foumd in JP 2001 225 392 and JP 2001 182836.

### DISCLOSURE OF THE INVENTION

In view of the above problems, an object of the present invention is to provide a process for producing a gasket for hard disc equipment which is capable of forming a gasket having a narrow line width and a large height on a cover member of the equipment, and a gasket for small-size hard disc equipment produced by the above process.

As a result of extensive researches in view of the above object, the present inventors have found that in the process for producing a gasket for hard disc equipment by extruding a gasket material from an extrusion orifice of a three-dimensional automatic coating controlling apparatus onto a cover member and then curing the extruded gasket material to obtain a gasket integrated with the cover member, by extruding the gasket material to form a first-stage gasket, and then further extruding the gasket material on the thus formed first-stage gasket to form a multi-stage gasket, the obtained gasket has not only a narrow line width but also a large height.

Further, the present inventors have found that in the process for producing a gasket for hard disc equipment by extruding a gasket material from an extrusion orifice of a three-dimensional automatic coating controlling apparatus onto a cover member and then curing the extruded gasket material to obtain a gasket integrated with the cover member, when the extrusion orifice is formed into a cross-sectional shape selected from ellipse, semi-ellipse formed by cutting a part of ellipse along a line parallel with a minor axis of the ellipse, rhombus, quadrangle and triangle, and is rotated according to a moving direction thereof such that a minor axis of the ellipse, a straight line of the semi-ellipse, a short diagonal line of the rhombus, a short side of the quadrangle or a base of the triangle is always kept substantially perpendicular to the moving direction, the resultant gasket has not only a narrow line width but also a large height.

In addition, the present inventors have found that when the gasket becomes insufficient in height by collapse due to its own weight, it is useful to cure the gasket material extruded from the extrusion orifice of a nozzle as quickly as possible in a non-contact manner. More specifically, an activation energy ray irradiation apparatus for curing the gasket material is disposed on a side of the extrusion orifice, and while forming a gasket body on the cover member by one stroke, the gasket material is immediately cured by irradiation of the activation energy ray, thereby successfully obtaining the aimed gasket having a sufficient height. Besides, the present inventors have found that when the gasket is extruded under a pressure of 50 kPa to 1 MPa and the gasket material used therefor has specific viscosity characteristics, the above effects can be more remarkably exhibited.

The present invention has been accomplished on the basis of the findings.

### BRIEF DESCRIPTION OF THE DRAWINGS

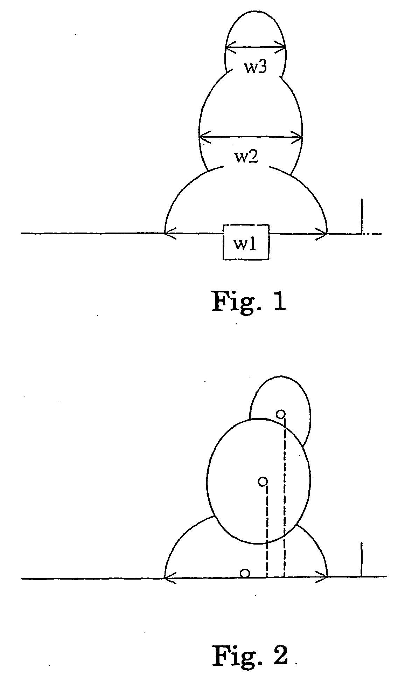

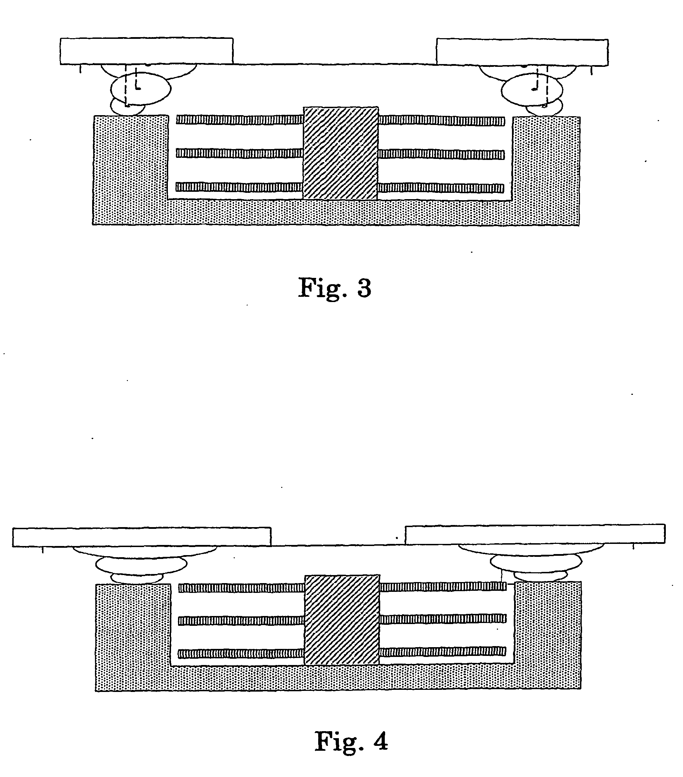

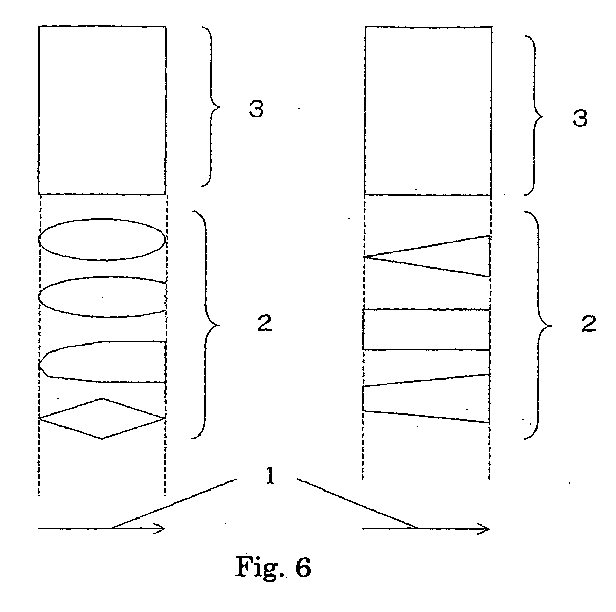

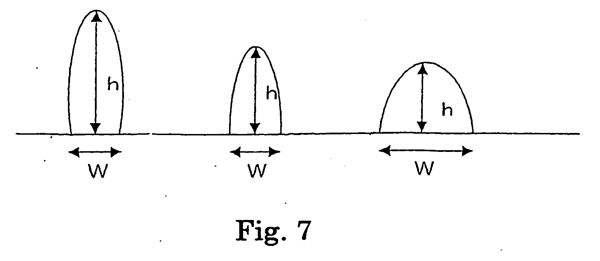

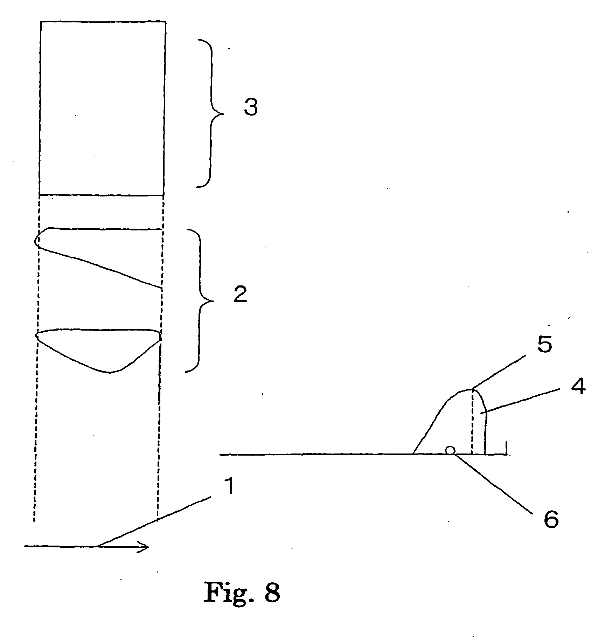

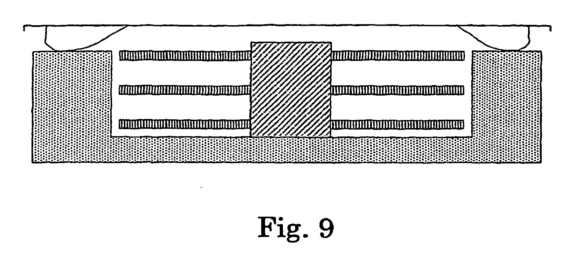

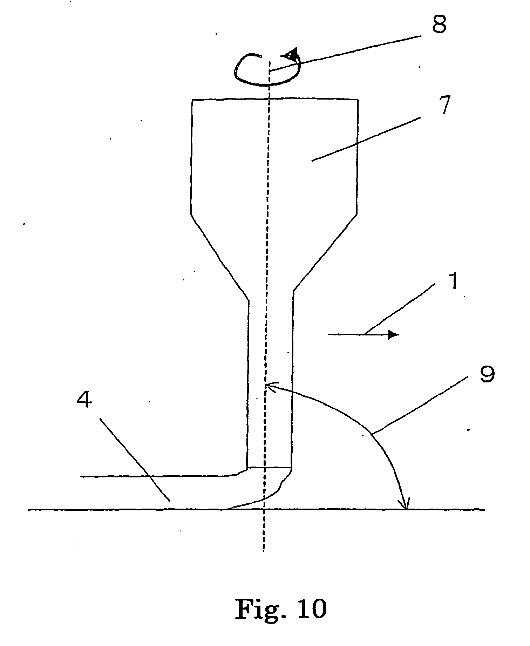

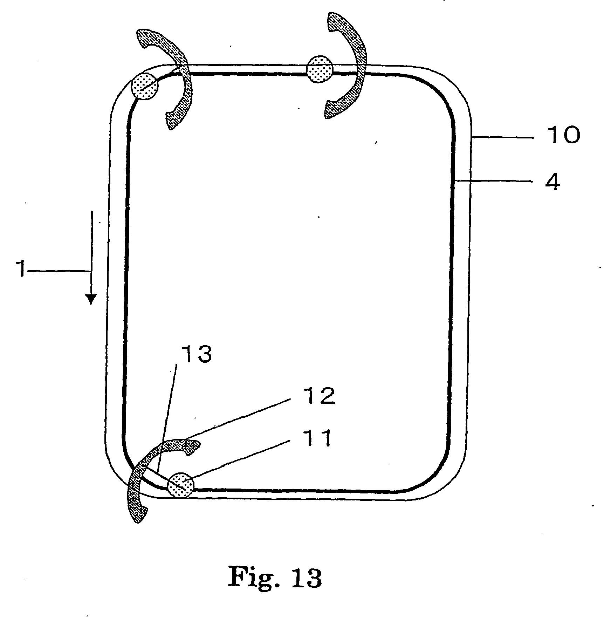

Figs. 1, 2 and 5 are conceptual views showing a gasket having a multi-stage structure according to the present invention. Figs. 3 and 4 are schematic views showing a gasket having a multi-stage structure which is applied to HDD. Fig. 6 is a conceptual view showing a shape of an extrusion orifice used in the present invention. Fig. 7 is a conceptual view showing an embodiment of a cross-sectional shape of a gasket when using modified cross-section extrusion orifices according to the present invention. Fig. 8 is a conceptual view showing an embodiment of a modified cross-section extrusion orifice as well as a cross-sectional shape of a gasket obtained using the modified cross-section extrusion orifice. Fig. 9 is a schematic views showing a gasket having a cross-sectional shape shown in Fig. 8 which is applied to HDD. Figs. 10 to 12 are conceptual views showing embodiments of extrusion of a gasket on a cover member. Fig. 13 is a conceptual view showing a direction of movement of an extrusion orifice as well as an orientation of a nozzle when the nozzle has an elliptical shape in cross section. In these figures, reference numeral 1 denotes a direction of movement of an extrusion orifice; 2 is a cross-sectional shape of the extrusion orifice; 3 is a side shape of the extrusion orifice; 4 is a gasket; 5 is an apex of the gasket; 6 is a center point of the gasket; 7 is the extrusion orifice; 8 is a rotation or revolution axis; 9 is an inclination of the extrusion orifice (θ°); 10 is a cover plate of HDD; 11 is a dispenser nozzle; 12 is a UV irradiation apparatus; and 13 is a joint portion between the dispenser nozzle and the UV irradiation apparatus.

### PREFERRED EMBODIMENT TO CARRY OUT THE INVENTION

The present invention is characterized by extruding a gasket material from an extrusion orifice of a three-dimensional automatic coating controlling apparatus onto a cover member to form a first-stage gasket, and then further extruding the gasket material on the first-stage gasket to form a multi-stage gasket. More specifically, a second-stage gasket is formed on the first-stage gasket, if necessary, followed by forming a third-stage gasket on the second-stage gasket. The thus formed gasket having a multi-stage structure can exhibit a narrow line width and a large height.

Examples of the extrusion apparatus include screw-type extruders, pneumatic-type extruders and plunger-type extruders. Among these extruders, for example, when using a screw-type extruder, the gasket material is kneaded therein so that a structural viscosity of the gasket material is lowered due to structure breakage thereof. As a result, even if the gasket material is kept in a stationary state after the extrusion, the material tends to still exhibit a low viscosity. Therefore, the height of each stage of the obtained gasket is reduced, so that a ratio (h/w) of the height (h) of the gasket to the line width (w) thereof on a joint surface to the cover member is lowered. Further, in the case where the gasket material is extruded on a lower-stage gasket that is still uncured and these stacked gasket materials are cured together at a final step, the lower-stage gasket cannot retain its shape until the curing step. As a result, when the upper stage gasket is put on the lower-stage gasket, the resultant multi-stage gasket may fail to have a sufficient height.

On the other hand, when using the pneumatic-type or plunger-type extruder, no lowering of the structural viscosity due to structural breakage tends to be caused. Therefore, the use of these extruders is preferable since the first-stage gasket tends to maintain its shape even though the second-stage gasket and further a third-stage gasket are put thereon.

In addition, in the process for producing the gasket for hard disc equipment according to the present invention, it is preferred that the lower-stage gasket is cured before extruding the upper-stage gasket thereon. More specifically, it is preferred that after forming the first-stage gasket, the first-stage gasket is cured before forming the second-stage gasket thereon, and further the second-stage gasket is cured before forming the third-stage gasket thereon. This is because the first-stage gasket can be prevented from being collapsed and, therefore, can maintain a sufficient height by curing the first-stage gasket before extruding the second-stage gasket thereon, and similarly the second-stage gasket can be prevented from being collapsed and, therefore, can maintain a sufficient height by curing the second-stage gasket before extruding the third-stage gasket thereon.

In particular, when using the above screw-type extruder, it is preferred that the first-stage gasket is cured before extruding the subsequent-stage gasket to ensure a sufficient height of the resultant multi-stage gasket. Meanwhile, in the case of the pneumatic-type or plunger-type extruder, it is not necessarily required to cure the first-stage gasket before extruding the subsequent-stage gasket, unlike the screw-type extruder. However, in certain cases, it is advantageous to cure the first-stage gasket before extruding the subsequent-stage gasket, depending upon a viscosity of the gasket material.

Also, in the multi-stage gasket of the present invention which includes an n-stage gasket (n is an integer of 2 or more) having a length (wₙ) of an axis thereof parallel with the cover member, and a (n-1)-stage gasket having a length (wₙ₋₁) of an axis thereof parallel with the cover member, the lengths (wₙ) and (wₙ₋₁) preferably satisfy the relationship represented by the formula: wₙ₋₁ ≥ wₙ in a 80% or more portion of the gasket. For example, this means that when n is 2 or 3, a line width (w₁) of the first-stage gasket on its joint surface to the cover member, a length (w₂) of a radius or axis of the second-stage gasket having a cross-sectional shape of circle, semi-circle, ellipse or semi-ellipse which radius or axis extends parallel with a surface of the cover member, and further a length (w₃) of an axis of the third-stage gasket satisfy the relationship represented by the formula: w₁ ≥ w₂ ≥ w₃ in a 80% or more portion and preferably an entire portion of the gasket. Fig. 1 is a conceptual view showing the case where gaskets are stacked. Thus, when the gaskets are stacked, the width of the upper-stage gasket is preferably narrower than that of the lower-stage gasket since these gaskets are hardly collapsed even when compressed. In the case of HDD, owing to the need of increasing a size of a memory disc, a thickness of a gasket-receiving frame is very small. Therefore, if the gasket is collapsed, there arises such a problem that the gasket is offset from the frame and no longer act as a seal. From the above viewpoints, it is more preferred to establish the relationship represented by the formula: wₙ₋₁/ wₙ > 1.1.

Meanwhile, in the case of HDD, one disc or a plurality of discs are disposed at a center thereof. Therefore, when using the gasket satisfying the above width relationship, the HDD is prevented from suffering from disadvantages such as failure in rotation of discs due to the gasket and defective reading or writing, which results in production of HDD having a good operability.

In addition, the n-stage gasket (n is an integer of 2 or more) preferably has a cross-sectional shape of either circle, semi-circle, ellipse or semi-ellipse, and a center point of the cross section of the n-stage gasket is preferably located more outside than a center point of the cross section of the (n-1)-stage gasket relative to a center of the cover member. Figs. 2 to 4 are conceptual views showing a gasket having a multi-stage structure when n is 3. More specifically, Fig. 2 schematically show such a multi-stage structure in which the center point of cross section of an upper-stage gasket is more offset toward an outside of the cover member than that of a lower-stage gasket; Fig. 3 schematically shows the case where the gasket is applied to actual HDD; and Fig. 4 schematically shows the case where the center points of the respective stage gaskets are aligned with each other along the direction perpendicular to the cover member. The structures as shown in Figs. 2 and 3 are advantageous since the obtained HDD is prevented from suffering from defects such as failure in rotation of discs due to the gasket and errors of reading or writing.

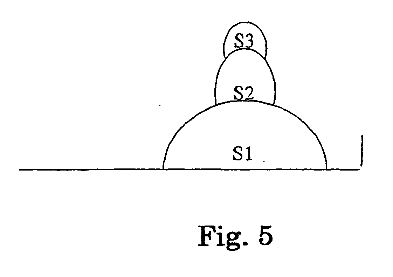

Further, when the gasket material is extruded using the dispenser with a nozzle having a modified cross-sectional shape, in order to achieve the requirement of w₁ ≥ wₙ ≥ wₙ₊₁, it is effective to establish the relationship represented by the formula: S₁ ≥ Sₙ ≥ Sₙ₊₁ wherein S₁ is a cross-sectional area of the first-stage gasket; Sₙ is a cross-sectional area of the n-stage gasket, thereby obtaining a stable gasket. More specifically, as shown in Fig. 5, it is preferable to satisfy the formula: S₁ ≥ S₂ ≥ S₃ wherein S₂ is a cross-sectional area of the second-stage gasket; and S₃ is a cross-sectional area of the third-stage gasket.

Next, the present invention is characterized in that the extrusion orifice of the three-dimensional automatic coating controlling apparatus has a modified non-circular cross-sectional shape having a major axis and a minor axis, and the minor axis is always kept substantially perpendicular to a moving direction of the extrusion orifice. The non-circular shape having a major axis and a minor axis includes, as shown in Fig. 6, ellipse, semi-ellipse formed by cutting a part of ellipse along a line parallel with a minor axis thereof, rhombus, quadrangle such as rectangle and trapezoid, triangle and other polygonal shapes, and the minor axis means a minor axis of ellipse, a straight line of semi-ellipse, a short diagonal line of rhombus, a short side of rectangle, a base of trapezoid, a base of triangle, a base of the respective polygonal shapes, etc. To always keep the minor axis such as a minor axis of ellipse, a straight line of semi-ellipse, a short side of quadrangle and a base of triangle substantially perpendicular to the moving direction of the extrusion orifice , there may be used various methods. For example, in the case where a nozzle constituting the extrusion orifice is arranged rotatably, and the gasket is formed by one stroke, the nozzle is rotated about a axis perpendicular to the cover member at non-linear portions of the gasket to be formed such as corner and curved portions according to the moving direction of the extrusion orifice. The above mechanism enables production of a gasket having a narrow line width and a large height.

The cross-sectional shape of the extrusion orifice is preferably formed such that the ratio (c/d) of a major axis (c) to a minor axis (d) of a elliptical or semi-elliptical cross-sectional shape exceeds 1.1; the ratio (e/f) of a long diagonal line (e) to a short diagonal line (f) of a rhombic cross-sectional shape exceeds 1.1; the ratio (g/i) of a long side (g) to a short side (i) of a rectangular cross-sectional shape exceeds 1.1; and the ratio (j/k) of a height (j) to a long side (k) (among two parallel sides) of a trapezoidal cross-sectional shape exceeds 1.1. The triangular cross-sectional shape is preferably an isosceles triangle having an apex angle of less than 90°. Thus, by rotating the extrusion orifice according to the moving direction thereof, and always keeping the minor axis of cross section of the extrusion orifice such as a minor axis of ellipse, a straight line of semi-ellipse, a short diagonal line of rhombus, a short side of quadrangle and a base of triangle substantially perpendicular to the moving direction thereof, the resultant gasket can exhibit not only a narrow line width but also a large height. In addition, at the tip end of the extrusion orifice, the straight line of semi-ellipse, the short side of quadrangle or the base of triangle is preferably located forward relative to the moving direction so as to allow the extruded gasket to come into contact with the cover member at an end portion of ellipse, a straight line of semi-ellipse, a short side of quadrangle or a base of triangle thereof in advance, and adhere or bond thereto. In particular, in the case of the extrusion orifice having an elliptical cross-sectional shape, when the ratio (c/d) exceeds 1.1, it is possible to readily produce a gasket having a ratio (h/w) of more than 0.8.

The thus produced gasket has a cross-sectional shape with a narrow line width and a large height as shown in the conceptual view of Fig. 7. In this case, the cross-sectional shape of the obtained gasket is not necessarily symmetrical. Namely, in one preferred embodiment of the present invention, an extrusion orifice having a cross-sectional shape as shown in Fig. 8 may be used to produce a gasket having a cross-sectional shape as also shown in Fig. 8. More specifically, the gasket as shown in Fig. 8 has such a configuration that the apex of cross section thereof is offset toward outside of the cover member relative to a center of a gasket portion contacting the cover member. Figs. 9 shows a schematic view in which the gasket having the cross-sectional shape as shown in Fig. 8 is applied to actual HDD. This arrangement has such an advantage that the obtained HDD is free from defects such as failure in rotation of discs due to the gasket, and errors of reading or writing.

The above cross-sectional shape of the extrusion orifice can be obtained by forming an orifice of a nozzle into the aimed cross-sectional shape during production process of the extrusion orifice. In addition, a tip end of the nozzle having a circular cross section may be cut obliquely to produce a substantially elliptical or semi-elliptical shape relative to the cover member. This method has such an advantage that a modified cross-section extrusion orifice can be produced in a convenient manner with a good reproducibility, because an extrusion orifice having a circular shape is readily available, and the extrusion orifice is readily cut obliquely.

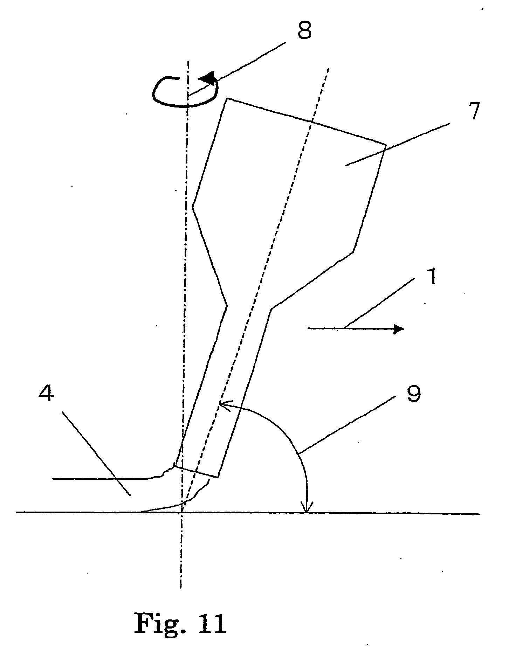

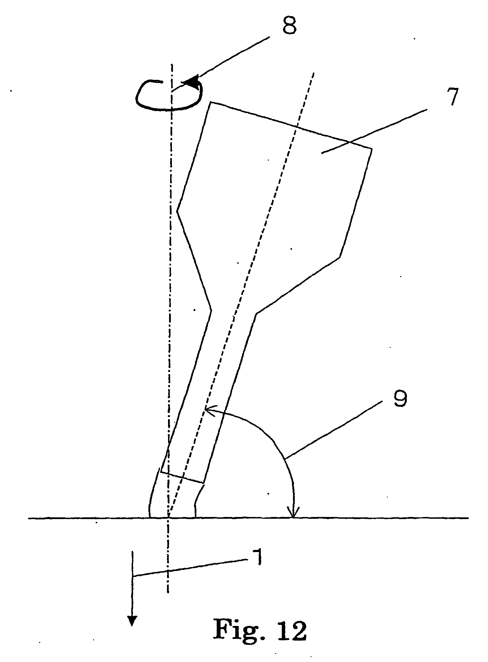

Next, the three-dimensional automatic coating controlling apparatus may be provided, if required, with a mechanism for inclining the extrusion orifice in the forward/rearward direction and rightward/leftward direction relative to a surface of the cover member and the moving direction of the extrusion orifice. The provision of such a mechanism allows an extrusion position of the gasket extruded as well as a shape of the extruded gasket to be accurately and precisely controlled. Figs. 10 to 12 are conceptual views showing the extrusion orifice of the three-dimensional automatic coating controlling apparatus. As shown in Fig. 10, the extrusion orifice can be disposed at an angle θ of 90° relative to the cover member upon extrusion of the gasket. In this case, the nozzle is rotated about a axis perpendicular to the cover member to thereby allow the gasket to be extruded into a desired shape by one stroke. Also, as shown in Fig. 11, the extrusion orifice can be inclined in the forward direction relative to the moving direction thereof such that the angle θ is less than 90° upon extrusion of the gasket. In this case, the nozzle is also preferably revolved about the axis perpendicular to the cover member. Further, as shown in Fig. 12, upon extrusion of the gasket, the extrusion orifice may be inclined in a plane making an angle of 90° relative to the moving direction thereof such that the angle θ is less than 90°. In the above case, the nozzle is also revolved about the axis perpendicular to the cover member.

In the HDD gasket of the present invention, the ratio (h/w) of the height (h) of the gasket to the line width (w) thereof on its joint surface to the cover member is preferably in the range of 0.8 to 3.0 and more preferably more than 0.8 in a 80% or more portion and preferably an entire portion of the gasket. When the ratio (h/w) is 0.8 or more, the effects of the present invention can be sufficiently achieved. On the other hand, when the ratio (h/w) is 3.0 or lower, the obtained gasket tends to become uncollapsable when compressed and, therefore, is free from sealing problems.

Also, the extrusion pressure used for production of the gasket is preferably in the range of 50 kPa to 1 MPa. When the extrusion pressure lies within the above-specified range, the gasket material can be extruded at a high efficiency without collapse thereof, thereby obtaining a gasket having a sufficiently narrow line width and a large height. From these viewpoints, the extrusion pressure upon production of the gasket is more preferably 80 to 800 kPa, still more preferably 100 to 800 kPa and most preferably 200 to 800 kPa.

The thus extruded gasket tends to undergo sagging or drawdown at an acute apex thereof as well as collapse near to a bottom thereof due to its own weight. As a result, in these cases, the obtained gasket has such a cross-sectional shape formed by cutting an ellipse along a line parallel with a minor axis of the ellipse. The exact cross-sectional shape of the finally obtained gasket may be determined according to a shape of the extrusion orifice, a discharge velocity of the gasket material, a moving velocity of the discharge port, viscoelastic characteristics of the gasket material, etc.

Meanwhile, an apparatus used for extrusion of the gasket is not particularly limited as long as the above extrusion pressure is attained thereby. However, for example, in the case of the screw-type extruder, the gasket material is kneaded therein. As a result, a structural viscosity of the gasket material tends to be lowered owing to structural breakage upon kneading, and the extruded gasket material tends to be flowed away even when kept in a stationary state after the extrusion, resulting in lowering of the ratio h/w of the resultant gasket. On the other hand, the use of the pneumatic-type extruder is more advantageous, since the gasket material tends to be free from lowering of the structural viscosity due to structural breakage thereof, so that the resultant gasket tends to maintain its shape.

Further, the use of a ram-type or a plunger-type extruder which extrudes the gasket material by applying a mechanical pressure thereto is also effective like the pneumatic-type extruder, since it is also free from lowering of the structural viscosity due to the structural breakage.

In the process for production of the gasket for hard disc equipment according to the present invention, there may be used various methods for curing the gasket material. Among these methods, there is preferably used the method of irradiating the molded gasket with an activation energy ray in a necessary amount capable of sufficiently curing the gasket material, from an activation energy ray irradiation apparatus.

The activation energy ray used for curing the gasket material includes an ultraviolet light, and ionizing radiation such as an electron beam, α-ray, β-ray and γ-ray. Of these energy rays, especially preferred is an ultraviolet light since an apparatus therefor is simple and easy to use, and the ultraviolet light can effectively cure the gasket material. Also, when the ultraviolet light is used, it is preferred to add a photopolymerization initiator and/or a photo-sensitizer to the gasket material. On the contrary, when the ionizing radiation such as electron beam and γ-ray is used, the gasket material can be rapidly cured without adding the photopolymerization initiator and/or photo-sensitizer thereto.

Examples of a light source for irradiating the ultraviolet light include electrode-type light sources such as a metal halide lamp, a xenon lamp, a low-pressure mercury lamp, a high-pressure mercury lamp and an ultrahigh-pressure mercury lamp, and electrodeless light sources such as an excimer lamp and a metal halide lamp. The atmosphere in which the ultraviolet light is irradiated is preferably an inert gas atmosphere such as nitrogen gas and carbon dioxide gas or an atmosphere having a reduced oxygen concentration. However, an ultraviolet-curable gasket material can be sufficiently cured even in an ordinary atmospheric air. The temperature of the atmosphere upon irradiation of the ultraviolet light is usually in the range of 10 to 200°C.

Further, there is preferably used the method in which the gasket material is cured by the ultraviolet light irradiated from an ultraviolet light irradiation apparatus simultaneously with extrusion of the gasket material from the extrusion orifice onto the cover member to integrate the gasket material with the cover member. In this method, since the time required from extrusion to curing of the gasket material is short, the gasket material can be cured without deformation of a shape thereof upon extrusion. Further, the ultraviolet light irradiation apparatus is preferably controlled so as to be moveable in association with the movement of the extrusion orifice of the three-dimensional automatic coating controlling apparatus. In this case, if the ultraviolet light impinges against the extrusion orifice, the gasket material contained therein is cured. Therefore, the ultraviolet light is preferably irradiated on the extruded gasket material so as to follow a locus of passage of the extrusion orifice while preventing the ultraviolet light from impinging against the extrusion orifice. For example, as shown in Fig. 13, there may be used the method in which the extrusion orifice is coupled with an ultraviolet irradiation outlet to be spaced by a given distance apart from each other to such an extent that the ultraviolet light irradiated is not interfered with the extrusion orifice, and the gasket material is extruded and then cured while rotating a line connecting between centers of the ultraviolet irradiation outlet and the extrusion orifice so as to be substantially aligned with the moving direction.

In the case of the modified cross-section extrusion orifice having various non-circular cross sectional shapes (such as flattened extrusion orifice), since the extrusion orifice is required to rotate in an aligned relation to the moving direction, the activation energy ray irradiation outlet can be fixedly coupled to the extrusion orifice to allow the ultraviolet light to be irradiated to an optimum position in association with the movement of the extrusion orifice.

In this case, it is preferred that after stopping extrusion of the gasket material, only the ultraviolet light is finally irradiated so as to follow the gasket portion as formed, thereby curing the gasket. Meanwhile, in the present invention, there may be used a modified apparatus of a commercially available coating apparatus constituted of a three-dimensional automatic coater equipped with a rotating device. If an irradiation range of the activation energy ray is too narrow, small curvature portions may fail to be surely irradiated with the activation energy ray. Therefore, the ultraviolet light irradiated preferably has a width of about 5 to 15 mm in the direction perpendicular to the moving direction. In addition, in order to apply a sufficient curing energy to the gasket material, the ultraviolet light preferably has a sufficient intensity and width.

When the ultraviolet light is irradiated in the above-described manner, there is obtained such an advantage that even the gasket material having a low yield value and a poor shape retention can be rapidly cured immediately after being extruded without breakage of a shape thereof. Further, when the gasket material is extruded into a multi-stage structure, it is possible to readily produce a gasket having a ratio (h/w) of 0.8 or more, i.e., a narrow width and a large height.

The gasket material used in the present invention may be appropriately selected from various materials according to production conditions of the gasket. Specific examples of the gasket material include those materials exhibiting a viscosity of preferably 50 to 1,000 Pa-s and more preferably 80 to 700 Pa·s at a shear rate of 1.0/s at a molding temperature thereof. The gasket material having a viscosity of 50 to 1,000 Pa·s exhibits a good fluidity and, therefore, can retain a gasket shape and is readily moldable into a desired gasket.

Meanwhile, the molding temperature of the gasket material is preferably in the range of 30 to 140°C and more preferably 40 to 120°C.

Also, when a common logarithm (y) of the viscosity (Pa·s) and a common logarithm (x) of the shear rate (s⁻¹) as measured at the molding temperature of the gasket is represented by the formula: y = -ax + b wherein a and b are positive numbers, the a value is preferably 0.2 or more, more preferably 0.25 or more and most preferably 0.35 or more. When the a value is less than 0.2, a shear rate dependency of the viscosity is small, so that the viscosity of the gasket material becomes too low, resulting in poor shape retention, or the viscosity of the gasket material becomes too high, resulting in inconvenience such as failure in extrusion of the gasket material.

Further, a so-called Casson plot obtained by plotting an one-second power of shear rate and an one-second power of shear stress measured while varying the shear rate on rectangular coordinates is used for evaluation of a yield value of the viscosity. The yield value is obtained as the second power of an intercept at which a line obtained by approximating the plots by least square method intersects the axis of the one-second power of shear stress, and is used as an index for evaluating a shape retention of the gasket material maintained in a stationary state after the extrusion and application thereof. The yield value exceeding 5 Pa enables production of a multi-stage gasket having a ratio (h/w) of 0.8 or more by the method of extruding and curing the upper-stage gasket after curing the lower-stage gasket. In addition, the yield value exceeding 30 Pa is more preferred because the second-stage gasket can be extruded before the first-stage gasket extruded is cured, and then the first-stage and second-stage gaskets can be cured together simultaneously. Further, from the above viewpoints, the yield value of the gasket material is more preferably 70 Pa or more. Also, in the case where the gasket is molded while rotating the above modified cross-section extrusion orifice, the yield value of the gasket material is preferably 30 Pa or more and more preferably 70 Pa or more.

As described above, the material having a high thixotropic property and a high shear rate dependency exhibits a low viscosity upon extrusion, and a high viscosity in a stationary state after the extrusion and, therefore, is a suitable gasket material since the resultant gasket is free from breakage of a shape thereof.

In the case of the screw-type extruder, as described above, since the gasket material is kneaded therein, the structural viscosity thereof is lowered owing to structural breakage, so that the viscosity of the gasket material kept in s stationary state tends to be lowered. For this reason, the use of the pneumatic-type or plunger-type extruder is more preferred.

Meanwhile, in order to control the viscosity of the gasket material and the relation between the viscosity and shear rate thereof to the above-specified ranges, there may be used the method of dispersing an inorganic filler therein, the method of blending an organic thickening agent therein, the method of controlling a molecular weight of a polymerizable oligomer used therein, the method of controlling a polarity of the material, etc. Examples of the inorganic filler usable in the above method include wet silica and dry silica which may or may not be rendered hydrophobic with silane-based coupling agents, silicone oil, modified silicone oil, sodium fluoride, magnesium silicofluoride, nonionic surfactants and synthetic polyethylene waxes, as well as bentonite, mica and synthetic smectite which may or may not be treated with a quaternary ammonium salt. Examples of the organic thickening agent include hydrogenated castor oil, amide waxes and polyethylene oxide.

Next, the gasket material has a hardness of 50° or lower and preferably 40° or lower as measured by a durometer A-type hardness test according to JIS K 6253. When the hardness is 50° or lower, the gasket tends to be deformed when assembling a cover with the gasket into a main body of the HDD. As a result, the cover is prevented from being flexed, so that a sealability of the HDD can be retained without damage thereto.

Further, in order to ensure a sealability of the gasket for HDD that is expected to be mounted to automobiles, the gasket material preferably has a permanent strain of 20% or lower and more preferably 10% or lower when measured after compressing the gasket material by 25% at 100°C and then allowing the material to stand for 24 h. Meanwhile, in order to prevent contamination of the hard disc, a total amount of gases generated from the gasket material upon heating as well as an amount of siloxane generated therefrom are preferably controlled to a low level. In addition, the gasket material preferably has a low moisture permeability in order to prevent penetration of water vapor into the HDD.

In the present invention, when using the gasket material having the above-specified properties, it is possible to obtain a gasket having a narrow line width and a large height. For example, if the line width of the obtained gasket is 1.0 mm, the height thereof is as large as 0.5 to 2.0 mm.

The gasket material used in the present invention is not particularly limited as long as the material has the above-specified properties. In particular, the gasket material preferably contains, as a main component, at least one material selected from the group consisting of urethanes, epoxy-based polymers, silicone, polyisoprene, hydrogenated polyisoprene, polybutadiene, hydrogenated polybutadiene, polyisobutylene, fluorine-containing rubbers and modified products thereof.

Of these gasket materials, most preferred are those materials containing acrylic-modified urethanes as a main component. Examples of the acrylic-modified urethanes include urethane acrylate oligomers of polyether polyols, urethane acrylate oligomers of polyester polyols, urethane acrylate oligomers containing both ether and ester groups in a molecule thereof, and urethane acrylate oligomers of carbonate diols containing a carbonate group. Examples of the polyether polyols include polyethylene glycol, polypropylene glycol, polytetramethylene glycol, polyhexamethylene glycol, and addition compounds obtained by adding ethyleneoxide or propyleneoxide to 1,3-butylene glycol, 1,4-butylene glycol, 1,6-hexane diol, neopentyl glycol, cyclohexane dimethanol, 2,2-bis(4-hydroxycyclohexyl)propane, bisphenol A, etc. The polyester polyols may be produced by reacting an alcohol component with an acid component. Examples of the alcohol component include polyethylene glycol, polypropylene glycol, polytetramethylene glycol, and addition compounds obtained by adding ethyleneoxide or propyleneoxide to 1,3-butylene glycol, 1,4-butylene glycol, 1,6-hexane diol, neopentyl glycol, 1,4-cyclohexane dimethanol, 2,2-bis(4-hydroxycyclohexyl)propane, bisphenol A, etc., or addition compounds obtained by adding ε-caprolactone thereto. Examples of the acid component include dibasic acids such as adipic acid, sebacic acid, azelaic acid and dodecane dicarboxylic acid, and anhydrides thereof. As the polyester polyols, there may also be used compounds obtained by reacting the alcohol component, the acid component and ε-caprolactone with each other at the same time. The carbonate diols may be produced, for example, by transesterification reaction of diaryl carbonates or dialkyl carbonates such as diphenyl carbonate, bis-chlorophenyl carbonate, dinaphthyl carbonate, phenyltoluyl carbonate, phenyl-chlorophenyl carbonate, 2-tolyl-4-tolyl carbonate, dimethyl carbonate and diethyl carbonate with diols such as 1,6-hexane diol, neopentyl glycol, 1,4-butane diol, 1,8-octane diol, 1,4-cyclohexane dimethanol, 2-methylpropane diol, dipropylene glycol and dibutylene glycol, reaction products of the above diol compounds with dicarboxylic acids such as oxalic acid, malonic acid, succinic acid, adipic acid, azelaic acid and hexahydrophthalic acid, or polyester diols as reaction products of ε-caprolactone. The thus obtained carbonate diols may be in the form of a monocarbonate diol containing one carbonate structural unit in a molecule thereof, or a polycarbonate diol containing two or more carbonate structural units in a molecule thereof. The especially preferred acrylic-modified urethanes contained in the gasket material used in the present invention are urethane acrylate oligomers of polyether polyols and polyester polyols. Examples of especially preferred organic diisocyanates used for production of the above urethanes include, but are not particularly limited to, methylene diisocyanate, tolylene diisocyanate, isophorone diisocyanate, 4,4'-dicyclohexylmethane diisocyanate and hexamethylene diisocyanate.

The gasket material used in the present invention may also contain known photopolymerization initiators. Examples of the photopolymerization initiators include intramolecular cleavage-type photopolymerization initiators e.g., benzoin alkyl ether-based compounds such as benzoin ethyl ether, benzoin isobutyl ether and benzoin isopropyl ether; acetophenone-based compounds such as 2,2-diethoxyacetophenone and 4'-phenoxy-2,2-dichloroacetophenone; propiophenone-based compounds such as 2-hydroxy-2-methylpropiophenone, 4'-isopropyl-2-hydroxy-2-methylpropiophenone and 4'-dodecyl-2-hydroxy-2-methylpropiophenone; benzyldimethyl ketal, 1-hydroxycyclohexyphenyl ketone, and anthraquinone-based compounds such as 2-ethyl anthraquinone and 2-chloroanthraquinone; and acyl phosphine oxide-based compounds; as well as other hydrogen abstraction-type photopolymerization initiators such as benzophenone/amine-based compounds; Michler's ketone/benzophenone-based compounds; thioxanthone-based compounds; and amine-based compounds. In addition, non-extraction-type photopolymerization initiators may also be used to avoid migration of unreacted photopolymerization initiators. Examples of the non-extraction-type photopolymerization initiators include high-molecular compounds produced from acetophenone-based initiators, and compounds obtaining by adding an acrylic double bond to benzophenone.

These photopolymerization initiators may be used singly or in the combination of any two or more thereof. The amount of the photopolymerization initiator blended is preferably 0.5 to 5 parts by mass and more preferably 1 to 3 parts by mass based on 100 parts by mass of the acrylic-modified urethanes as an main component of the gasket material.

The gasket material used in the present invention may further contain photosensitizers, thermal polymerization inhibitors, curing accelerators, pigments, etc., unless the addition thereof adversely affects the effects of the present invention.

The cover member that is integrated with the gasket produced by extruding and curing the gasket material may be made of metals or synthetic resins such as thermoplastic resins. Examples of the metals used for the cover member include nickel-plated aluminum, nickel-plated steel, cold-rolled steel, zinc-plated steel, aluminum/zinc alloy-plated steel, stainless steel, aluminum, aluminum alloys, magnesium and magnesium alloys. The metals for the cover member may be appropriately selected from these materials. Further, in the present invention, injection-molded magnesium may also be used as the cover member. In view of good corrosion resistance, nickel-electroless plated metals are suitably used. In the present invention, of these nickel-electroless plated metals, preferred are nickel-plated aluminum and nickel-plated steel. In the present invention, there may be used known nickel-electroless plating methods that are applicable to conventional metal materials, for example, the method of dipping a metal plate in a nickel-electroless plating bath composed of an aqueous solution containing an appropriate amount of nickel sulfate, sodium hypophosphite, lactic acid, propionic acid, etc., and having a pH of about 4.0 to 5.0 at a temperature of about 85 to 95°C.

Examples of the thermoplastic resins used for the cover member include styrene-based resins such as acrylonitrile/styrene (AS) resins, acrylonitrile/butadiene/styrene (ABS) resins, polystyrene and syndiotactic polystyrenes, olefin-based resins such as polyethylene, polypropylene and polypropylene composites, e.g., ethylene-propylene copolymers, polyamide-based resins such as nylon, polyester-based resins such as polyethylene terephthalate and polybutylene terephthalate, and other thermoplastic resins such as modified polyphenylene ethers, acrylic resins, polyacetals, polycarbonates, liquid crystal polymers and polyphenylene sulfides (PPS). The thermoplastic resin for the cover member may be appropriately selected from these compounds. The liquid crystal polymers are preferably thermotropic liquid crystal polymers, and specific examples thereof include polycarbonate-based liquid crystal polymers, polyurethane-based liquid crystal polymers, polyamide-based liquid crystal polymers and polyester-based liquid crystal polymers. These resins may be used singly or in the combination of any two or more thereof.

In order to enhance adhesion between the cover member and the gasket, the surface of the cover member may be previously treated. Examples of the surface treatment include plasma treatment and corona discharge treatment. The plasma treatment may be performed using, for example, a plasma irradiation apparatus available from Keyence Corp.

Meanwhile, upon production of the gasket, in some cases, the gasket is formed with protrusions at not only an outer peripheral portion but also an inner peripheral portion thereof. In such a case, the process for producing the gasket according to the present invention may be used in combination with the other molding methods. That is, the outer peripheral portion of the gasket may be produced by the extrusion process of the present invention, whereas the protrusions at the inner peripheral portion may be formed by the other molding methods. This procedure is effective in the cases where the inner protrusions are hardly moldable by the extrusion method, where a very high accuracy is required, where a high adhesion force is required, where material properties unavailable from extrudable materials are required, etc. Examples of the other molding methods include the method of directly injection-molding a thermoplastic rubber or a thermosetting rubber onto the cover member, the method of bonding previously formed protrusions to the gasket by a bonding agent or an adhesive, etc. When the protrusions are formed by the injection-molding method, the cover member may be previously coated with an adhesive, or an adhesive rubber may be injection-molded onto the cover member.

The present invention will be described in more detail below with reference to the following examples. However, these examples are only illustrative and not intended to limit the invention thereto.

### Gasket Production Apparatus

### (1) Three Dimensional Automatic Coating Controlling Apparatus

As the three-dimensional automatic coating controlling apparatus, there were used "CENTURY C720" available from NORDSON Inc. (hereinafter referred to as "apparatus 1"), and "Custom-Built Shot Master 3" available from Musashi Engineering Co., Ltd. (hereinafter referred to as "apparatus 2"). The apparatus 1 is a screw-type extruder, and the apparatus 2 is usable as either a screw-type or pneumatic-type extruder. In the Examples and Comparative Examples, the apparatus 2 was used as a pneumatic-type extruder. In these extruders, a replaceable extrusion orifice having a circular shape was used upon the extrusion. The size of a nozzle used in these apparatuses is represented by an inner diameter thereof in Table 1.

### (2) Ultraviolet-Curing Apparatus

"UV1501BA-LT" available from Sen Engineering Co., Ltd., was used.

### Gasket Materials

(1) PU#1: Ultraviolet-curable urethane containing an acrylic-modified ether-based urethane to which silica was added to impart a thixotropic property thereto. In addition, PU#1 exhibited a viscosity of 251 Pa·s as measured at 50°C and a shear rate of 1.0/s, a relationship represented by the formula: y = -0.544x + 2.399 wherein y is a common logarithm of the viscosity (Pa-s) and x is a common logarithm of the shear rate (s⁻¹), and a yield value of 110 Pa as determined from a Casson plot thereof at 50°C.
(2) PU#2: Ultraviolet-curable urethane containing an acrylic-modified ether-based urethane which had no thixotropic property because of no addition of the filler thereto. In addition, PU#2 exhibited a viscosity of 80 Pa·s as measured at 50°C and a shear rate of 1.0/s, a relationship represented by the formula: y = -0.01x + 1.64 wherein y is a common logarithm of the viscosity (Pa·s) and x is a common logarithm of the shear rate (s⁻¹), and a yield value as low as 0.25 Pa as measured at 50°C from Casson plot thereof.

### Viscosity-Measuring Method

Using "Rheo Stress R150" available from HAAKE Inc., a sample was placed between parallel discs spaced by a distance of 0.2 mm apart from each other. The apparatus was rotated at a given temperature and a given shear stress, and a shear rate was determined from the number of revolution thereof. Further, the shear stress was divided by the shear rate to calculate the viscosity.

### EXAMPLE 1

The gasket material PU#1 was applied onto a 0.4 mm-thick nickel-plated aluminum plate of a 2.5-inch HDD under the conditions shown in Table 1 using the above apparatus 1, and then cured using an ultraviolet curing apparatus, thereby forming a first-stage gasket. Next, the same gasket material was extruded onto the first-stage gasket under the same conditions, and then cured using the ultraviolet curing apparatus, thereby forming a second-stage gasket. Meanwhile, in Table 1, the number of application "2" means that the gasket material was applied twice to form the first-stage and second-stage gaskets, and the number of curing "2" means that the first-stage and second-stage gaskets were respectively cured.

The details of a shape of the thus obtained gasket are shown in Table 2. As a result, it was confirmed that a good gasket having a ratio h/w of 1.0 was produced.

### EXAMPLE 2

The gasket material PU#1 was applied onto a 0.4 mm-thick nickel-plated aluminum plate of a 2.5-inch HDD under the conditions shown in Table 1 using the above apparatus 2 to form a first-stage gasket. Next, the same gasket material was extruded onto the first-stage gasket under the same conditions to form a second-stage gasket, and then both the first-stage and second-stage gaskets were cured using an ultraviolet curing apparatus. Meanwhile, in Table 1, the number of application "1" means that after respectively applying the first-stage and second-stage gaskets, both the gaskets were cured at one time.

The details of a shape of the thus obtained gasket are shown in Table 2. As a result, it was confirmed that when the gasket material was pneumatically extruded using the apparatus 2, a good gasket having a ratio h/w of 1.7 was produced nevertheless the first-stage gasket was not cured after the application thereof. This was because the first-stage gasket underwent no shearing force upon extrusion thereof and, therefore, was free from deterioration in its viscosity, and had a high shape retention property.

### EXAMPLE 3

The same procedure as in EXAMPLE 2 was repeated except that the first-stage gasket was cured using the ultraviolet curing apparatus after application thereof but before forming the second-stage gasket thereon, thereby forming a gasket. The details of a shape of the thus obtained gasket are shown in Table 2. As a result, it was confirmed that the thus obtained gasket was further enhance in ratio h/w as compared to that obtained in EXAMPLE 2.

### COMPARATIVE EXAMPLE 1

The gasket material PU#2 was applied onto a 0.4 mm-thick nickel-plated aluminum plate of a 2.5-inch HDD under the conditions shown in Table 1 using the apparatus 2, and then cured using an ultraviolet curing apparatus, thereby forming a gasket. The details of a shape of the thus obtained gasket are shown in Table 2.

As a result, it was confirmed that when the gasket material was pneumatically extruded under an air pressure of 330 kPa at an ordinary temperature, the material applied was spread around and had a ratio h/w as low as 0.5, thereby failing to obtain a good gasket.

### COMPARATIVE EXAMPLE 2

The gasket material PU#2 was applied onto a 0.4 mm-thick nickel-plated aluminum plate of a 2.5-inch HDD under the conditions shown in Table 1 using the apparatus 2 to form a first-stage gasket. Next, the same gasket material was extruded onto the first-stage gasket under the same conditions to form a second-stage gasket, and then both the first-stage and second-stage gaskets were cured using an ultraviolet curing apparatus. The details of a shape of the thus obtained gasket are shown in Table 2.

As a result, it was confirmed that even when the first-stage and second-stage gaskets were stacked together under the above conditions, the ratio h/w was as low as 0.73, thereby failing to obtain a good gasket.

### COMPARATIVE EXAMPLE 3

The gasket material PU#1 was applied onto a 0.4 mm-thick nickel-plated aluminum plate of a 2.5-inch HDD under the conditions shown in Table 1 using the apparatus 1, and then cured using an ultraviolet curing apparatus, thereby forming a gasket. The details of a shape of the thus obtained gasket are shown in Table 2.

### COMPARATIVE EXAMPLE 4

The gasket material PU#1 was applied onto a 0.4 mm-thick nickel-plated aluminum plate of a 2.5-inch HDD under the conditions shown in Table 1 using the apparatus 2, and then cured using an ultraviolet curing apparatus, thereby forming a gasket. The details of a shape of the thus obtained gasket are shown in Table 2.

### COMPARATIVE EXAMPLE 5

The gasket material PU#1 was applied onto a 0.4 mm-thick nickel-plated aluminum plate of a 2.5-inch HDD under the conditions shown in Table 1 using the apparatus 1, and then cured using an ultraviolet curing apparatus, thereby forming a gasket. The details of a shape of the thus obtained gasket are shown in Table 2.

**TABLE 1-1**

| Examples and Comparative Examples | Gasket material | Three-dime nsional automatic controlling apparatus | Extrusion method | Shape of extrusion orifice | Inner diameter of extrusion orifice |
|---|---|---|---|---|---|
| Example 1 | PU#1 | Apparatus 1 | Screw | Circular | φ1.25 |
| Example 2 | PU#1 | Apparatus 2 | Pneumatic | Circular | φ1.1 |
| Example 3 | PU#1 | Apparatus 2 | Pneumatic | Circular | φ1.1 |
| Comparative Example 1 | PU#2 | Apparatus 2 | Pneumatic | Circular | φ1.25 |
| Comparative Example 2 | PU#2 | Apparatus 2 | Pneumatic | Circular | φ1.25 |
| Comparative Example 3 | PU#1 | Apparatus 1 | Screw | Circular | φ1.25 |
| Comparative Example 4 | PU#1 | Apparatus 2 | Pneumatic | Circular | φ1.25 |
| Comparative Example 5 | PU#1 | Apparatus 1 | Screw | Circular | φ1.25 |

**TABLE 1-2**

| Examples and Comparative Examples | Extrusion pressure (kPa) | Temperature of gasket material (°C) | Number of application | Number of curing |
|---|---|---|---|---|
| Example 1 | - | Ordinary temperature | 2 | 2 |
| Example 2 | 450 | 55 | 2 | 1 |
| Example 3 | 450 | 55 | 2 | 2 |
| Comparative Example 1 | 330 | Ordinary temperature | 1 | 1 |
| Comparative Example 2 | 330 | Ordinary temperature | 2 | 1 |
| Comparative Example 3 | - | Ordinary temperature | 1 | 1 |
| Comparative Example 4 | 380 | 55 | 1 | 1 |
| Comparative Example 5 | - | 55 | 2 | 1 |

**TABLE 2**

| Examples and Comparative Examples | Shape of gasket | | | |
|---|---|---|---|---|
| | Cross-sectional shape | Height (h) (mm) | Line width (w) (mm) | h/w |
| Example 1 | Semi-circular + elliptical | 2 | 2 | 1 |
| Example 2 | Semi-elliptical + circular | 1.5 | 0.9 | 1.7 |
| Example 3 | Semi-elliptical + circular | 1.6 | 0.9 | 1.8 |
| Comparative Example 1 | Semi-circular | 1 | 2 | 0.5 |
| Comparative Example 2 | Semi-elliptical | 1.6 | 2.2 | 0.73 |
| Comparative Example 3 | Semi-circular | 1 | 2 | 0.5 |
| Comparative Example 4 | Semi-elliptical | 1.1 | 1.4 | 0.79 |
| Comparative Example 5 | Semi-circular | 1.6 | 2.5 | 0.6 |

### EXAMPLE 4

The gasket material PU#1 was applied onto a 0.4 mm-thick nickel-plated aluminum plate of a 2.5-inch HDD using the apparatus 2, and then cured using an ultraviolet curing apparatus. While rotating a nozzle having an elliptical cross-sectional shape (1.1 x 1.8 mm) such that a minor axis of the nozzle was always kept in a direction substantially perpendicular to a moving direction of an extrusion orifice thereof, namely a longer diameter (major axis) of the ellipse was always substantially aligned with the moving direction as shown in Fig. 6, the gasket material was extruded under the conditions shown in Table 3, thereby obtaining a gasket. The details of a shape of the thus obtained gasket are shown in Table 4.

As shown in Table 4, it was confirmed that the method used in EXAMPLE 4 enabled production of a gasket having a semi-elliptical cross section and a ratio h/w of 1.5 which was uniformly formed over an entire peripheral portion of the aluminum plate.

### EXAMPLE 5

The same procedure as in EXAMPLE 4 was repeated except that a nozzle having an elliptical cross section (1.1 x 1.5 mm) was used, thereby obtaining a gasket. The details of a shape of the thus obtained gasket are shown in Table 4. As a result, it was confirmed that when the cross-sectional shape of the nozzle was thus varied, the ratio h/w of the resultant gasket was suitably controlled.

### EXAMPLE 6

The same procedure as in EXAMPLE 4 was repeated except that a nozzle having an isosceles triangular cross section (1.2 x 1.7 mm) was used, and the extrusion pressure was changed as shown in Table 3, thereby obtaining a gasket. The details of a shape of the thus obtained gasket are shown in Table 4.

### COMPARATIVE EXAMPLE 6

The gasket material PU#2 was applied onto a 0.4 mm-thick nickel-plated aluminum plate of a 2.5-inch HDD using the three-dimensional automatic coating controlling apparatus 2, and then cured using an ultraviolet curing apparatus. Specifically, the gasket material was extruded under the conditions shown in Table 3 using a nozzle having a circular cross section (φ1.25 mm) without rotating the nozzle. The details of a shape of the thus obtained gasket are shown in Table 4. As a result, it was confirmed that the ratio h/w was as low as 0.5, thereby failing to obtain a good gasket.

### COMPARATIVE EXAMPLE 7

The same procedure as in EXAMPLE 4 was repeated except for using the three-dimensional automatic coating controlling apparatus 1 of a screw-extrusion type, thereby producing a gasket. Specifically, the gasket material was extruded under the conditions shown in Table 3 using a nozzle having a circular cross section (φ1.25 mm) without rotating the nozzle. The details of a shape of the thus obtained gasket are shown in Table 4.

As a result, it was confirmed that the gasket material underwent a shearing force and, therefore, was deteriorated in viscosity, so that the ratio h/w thereof was as low as 0.6, thereby failing to obtain a good gasket.

### COMPARATIVE EXAMPLE 8

The same procedure as in EXAMPLE 4 was repeated except that the gasket material was extruded using a nozzle having a circular cross section (φ1.25 mm) without rotating the nozzle, thereby obtaining a gasket. The details of a shape of the thus obtained gasket are shown in Table 4.

### COMPARATIVE EXAMPLE 9

The same procedure as in EXAMPLE 4 was repeated except that the gasket material was extruded without rotating the nozzle, thereby obtaining a gasket. The details of a shape of the thus obtained gasket are shown in Table 4.

As a result, it was confirmed that when the major axis of the nozzle was aligned with the moving direction, the obtained gasket portion had a height of 1.5 mm, a line width of 1.0 mm and a ratio h/w of 1.5, whereas when the minor axis of the nozzle was aligned with the moving direction, the obtained gasket portion had a height of 0.9 mm, a line width of 1.8 mm and a ratio h/w of 0.5, namely the resultant gasket was non-uniform in height.

**TABLE 3-1**

| Examples and Comparative Examples | Gasket material | Three-dimensio nal automatic controlling apparatus | Extrusion method | Shape of extrusion orifice |
|---|---|---|---|---|
| Example 4 | PU#1 | Apparatus 2 | Pneumatic | Elliptical |
| Example 5 | PU#1 | Apparatus 2 | Pneumatic | Elliptical |
| Example 6 | PU#1 | Apparatus 2 | Pneumatic | Isosceles triangular |
| Comparative Example 6 | PU#2 | Apparatus 2 | Pneumatic | Circular |
| Comparative Example 7 | PU#1 | Apparatus 1 | Screw | Circular |
| Comparative Example 8 | PU#1 | Apparatus 2 | Pneumatic | Circular |
| Comparative Example 9 | PU#1 | Apparatus 2 | Pneumatic | Elliptical |

**TABLE 3-2**

| Examples and Comparative Examples | Inner diameter of extrusion orifice | Rotation or non-rotation of nozzle | Extrusion pressure (kPa) | Temperature of gasket material (°C) |
|---|---|---|---|---|
| Example 4 | 1.1 x 1.8 | Rotated | 450 | 55 |
| Example 5 | 1.1 x 1.5 | Rotated | 450 | 55 |
| Example 6 | 1.2 x 1.7 | Rotated | 500 | 55 |
| Comparative Example 6 | φ1.25 | Non-rotated | 330 | Ordinary temperature |
| Comparative Example 7 | φ1.25 | Non-rotated | - | Ordinary temperature |
| Comparative Example 8 | φ1.25 | Non-rotated | 450 | 55 |
| Comparative Example 9 | 1.1 x 1.8 | Non-rotated | 450 | 55 |

**TABLE 4**

| Examples and Comparative Examples | Shape of gasket | | | |
|---|---|---|---|---|
| | Cross-sectional shape | Height (h) (mm) | Line width (w) (mm) | h/w |
| Example 4 | Semi-elliptical | 1.5 | 1 | 1.5 |
| Example 5 | Semi-elliptical | 1.3 | 1 | 1.3 |
| Example 6 | Isosceles triangular | 1.5 | 1 | 1.5 |
| Comparative Example 6 | Semi-circular | 1 | 2. | 0.5 |
| Comparative Example 7 | Semi-circular | 1 | 2 | 0.5 |
| Comparative Example 8 | Semi-circular | 1.1 | 1.4 | 0.79 |
| Comparative Example 9 | Semi-elliptical | 1.5 to 0.9 | 1.0 to 1.8 | 1.5 to 0.5 |

### INDUSTRIAL APPLICABILITY

According to the present invention, a gasket having a large height can be integrated with a cover member without using a mold and requiring blanking of sheets and bonding processes, and the obtained gasket can be suitably used as a gasket for small-size hard disc equipment.

## Claims

1. A process for producing a gasket (4) for hard disc equipment which is integrated with a cover member by extruding a gasket material from an extrusion orifice (7) of a three-dimensional automatic coating controlling apparatus onto the cover member and then curing the extruded gasket material, wherein a ratio (h/w) of a height (h) of the gasket to a line width (w) thereof on a joint surface between the gasket and the cover member is in the range of 0.8 to 3.0 in a 80% or more portion of the gasket, wherein the three-dimensional automatic coating controlling apparatus includes a pneumatic-type extruder, **characterised in that** when a common logarithm x of a shear rate s⁻¹ and a common logarithm y of a viscosity Pa·s of the gasket material is represented by the formula: y = -ax + b wherein a and b are positive numbers, the a value is 0.3 or more,
wherein the gasket material is extruded from the extrusion orifice of the three-dimensional automatic coating controlling apparatus to form a first-stage gasket, and then the gasket material is further extruded on the first-stage gasket to obtain a multi-stage gasket.

2. The process according to claim 1, wherein the first-stage gasket is cured after formation thereof but before formation of the subsequent-stage gasket.

3. The process according to claim 1, wherein the multi-stage gasket includes an n-stage gasket (n is an integer of 2 or more) having a length (wₙ) of an axis thereof parallel with the cover member, and a (n-1)-stage gasket having a length (wₙ₋₁) of an axis thereof parallel with the cover member in which the lengths (wₙ) and (wₙ₋₁) satisfy a relationship represented by the formula: wₙ₋₁≥wₙ in a 80% or more portion of the gaskets.

4. The process according to claim 3, wherein the multi-stage gasket includes the n-stage gasket (n is an integer of 2 or more) having the length (wₙ) of an axis thereof parallel with the cover member, and the (n-1)-stage gasket having the length (wₙ₋₁) of an axis thereof parallel with the cover member in which the lengths (wₙ) and (wₙ₋₁) satisfy a relationship represented by the formula: wₙ₋₁/wₙ > 1.1.

5. The process according to claim 3, wherein the n-stage gasket (n is an integer of 2 or more) has any of a circular shape, a semi-circular shape, an elliptical shape and a semi-elliptical shape in cross section thereof, and a center of a cross section of the n-stage gasket is offset from a center of a cross section of the (n-1)-stage gasket outwardly relative to a center of the cover member.

6. The process according to claim 1, wherein the gasket material is extruded while moving the extrusion orifice of the three-dimensional automatic coating controlling apparatus along a peripheral edge of the cover member, the extrusion orifice has a modified cross-sectional shape having a major axis and a minor axis and is rotated according to a moving direction thereof, and the minor axis of the extrusion orifice is always kept substantially perpendicular to the moving direction.

7. The process according to claim 6, wherein the extrusion orifice has a cross-sectional shape (2) selected from ellipse, semi-ellipse formed by cutting a part of ellipse along a line parallel with the minor axis, rhombus, quadrangle and triangle, and is rotated according to the moving direction of the extrusion orifice such that a minor axis of ellipse, a straight line of semi-ellipse, a short diagonal line of rhombus, a short side of quadrangle or a base of triangle is always kept substantially perpendicular to the moving direction.

8. The process according to any of claims 1 to 7, wherein a pressure used for extrusion of the gasket is in the range of 50 kPa to 1 MPa.

9. The process according to any of claims 1 to 8, wherein the gasket material has a viscosity of 50 to 1,000 Pa·s as measured at a molding temperature of the gasket and a shear rate of 1.0/s.

10. The process according to any of claims 1 to 9, wherein the gasket material used has an intercept value of (5 Pa)^{1/2} or more (corresponding to a yield value of 5 Pa or more) at which a line obtained by plotting an one-second power of a shear rate (s⁻¹) and an one-second power of a shear stress while varying the shear rate at a molding temperature thereof, intersects an axis of the one-second power of shear stress.

11. The process according to any of claims 1 to 9, wherein the gasket material used has an intercept value of (30 Pa)^{1/2} or more (corresponding to a yield value of 30 Pa or more) on an axis of the one-second power of shear stress thereof.

12. The process according to any of claims 1 to 9, wherein the gasket material used has an intercept value of (70 Pa)^{1/2} or more (corresponding to a yield value of 70 Pa or more) on an axis of the one-second power of shear stress thereof.

13. The process according to any of claims 1 to 12, wherein the gasket material has a hardness of 50° or lower as measured by a durometer type-A hardness test according to JIS K 6253.

14. The process according to any of claims 1 to 13, wherein the gasket material contains, as a main component, at least one material selected from the group consisting of urethanes, epoxy-based polymers, silicone, polyisobutylene, hydrogenated polyisobutylene, polybutadiene, hydrogenated polybutadiene, fluorine-containing rubbers and modified products thereof.

15. The process according to claim 14, wherein the gasket material is an acrylic-modified urethane.

16. The process according to any of claims 1 to 15, wherein the gasket material is cured by irradiating an activation energy ray thereto from an activation energy ray irradiation apparatus (12).

17. The process according to claim 16, wherein the activation energy ray irradiation apparatus is an ultraviolet light irradiation apparatus, and an irradiation outlet thereof is moved in association with the extrusion orifice of the three-dimensional automatic coating controlling apparatus.

18. The process according to claim 17, wherein the irradiation outlet of the ultraviolet light irradiation apparatus is revolved around the extrusion orifice of the three-dimensional automatic coating controlling apparatus by the same angle as an angle of rotation of the extrusion orifice simultaneously therewith.

19. A gasket for hard disc equipment produced by the process as claimed in any of claims 1 to 18 which is applied to a hard disc equipment having a size of less than 3.5 inch (88.9 mm).

## Patentansprüche

1. Verfahren zur Herstellung einer Dichtung (4) für ein Festplattenlaufwerk, die mit einem Abdeckelement zusammenhängend ist, indem ein Dichtungsmaterial aus einer Extrudierdüse (7) einer dreidimensionalen automatischen Beschichtungssteuervorrichtung auf das Abdeckelement extrudiert und danach das extrudierte Dichtungsmaterial ausgehärtet wird, wobei ein Verhältnis (h/w) einer Höhe (h) der Dichtung zu einer Strangbreite (w) davon auf einer Verbindungsfläche zwischen der Dichtung und dem Abdeckelement im Bereich von 0,8 bis 3,0 in einem 80%igen oder größerem Abschnitt der Dichtung liegt, wobei die dreidimensionale automatische Beschichtungssteuervorrichtung einen pneumatischen Extruder umfasst, **dadurch gekennzeichnet, dass**, wenn ein gemeiner Logarithmus x einer Schergeschwindigkeit s⁻¹ und ein gemeiner Logarithmus y einer Viskosität Pa·s des Dichtungsmaterials durch die Formel y = -ax + b, worin a und b positive Zahlen sind, dargestellt wird, der a-Wert 0,3 oder größer ist,
wobei das Dichtungsmaterial aus der Extrudierdüse der dreidimensionalen automatischen Beschichtungssteuervorrichtung extrudiert wird, um eine Dichtung der ersten Stufe zu bilden, und danach wird das Dichtungsmaterial weiter auf die Dichtung der ersten Stufe extrudiert, um eine mehrstufige Dichtung zu erhalten.

2. Verfahren nach Anspruch 1, bei dem die Dichtung der ersten Stufe nach deren Bildung, aber vor der Bildung der Folgestufendichtung, ausgehärtet wird.

3. Verfahren nach Anspruch 1, bei dem die mehrstufige Dichtung eine n-stufige Dichtung (n ist eine ganze Zahl von 2 oder größer) mit einer Länge (wₙ) einer Achse davon parallel zum Abdeckelement und eine (n-1-stufige) Dichtung mit einer Länge (wₙ₋₁) einer Achse davon parallel zum Abdeckelement umfasst, wobei die Längen (wₙ) und (wₙ₋₁) eine Beziehung erfüllen, die durch die Formel wₙ₋₁ ≥ wₙ in einem 80%igen oder größerem Abschnitt der Dichtungen verkörpert wird.

4. Verfahren nach Anspruch 3, bei dem die mehrstufige Dichtung die n-stufige Dichtung (n ist eine ganze Zahl von 2 oder größer) mit einer Länge (wₙ) einer Achse davon parallel zum Abdeckelement und eine (n-1-stufige) Dichtung mit einer Länge (wₙ-₁) einer Achse davon parallel zum Abdeckelement umfasst, wobei die Längen (wₙ) und (wₙ₋₁) eine Beziehung erfüllen, die durch die Formel wₙ₋₁/wₙ > 1,1 verkörpert wird.

5. Verfahren nach Anspruch 3, bei dem die n-stufige Dichtung (n ist eine ganze Zahl von 2 oder größer) irgendeine von einer kreisförmigen Form, einer halbkreisförmigen Form, einer elliptischen Form und einer halbelliptischen Form im Querschnitt aufweist, und wobei eine Mitte eines Querschnittes der n-stufigen Dichtung von einer Mitte eines Querschnittes der (n-1-stufigen) Dichtung nach außen relativ zu einer Mitte des Abdeckelementes versetzt ist.

6. Verfahren nach Anspruch 1, bei dem das Dichtungsmaterial extrudiert wird, während sich die Extrudierdüse der dreidimensionalen automatischen Beschichtungssteuervorrichtung entlang eines peripheren Randes des Abdeckelementes bewegt, wobei die Extrudierdüse eine modifizierte Querschnittsform mit einer Hauptachse und einer Nebenachse aufweist und entsprechend einer Bewegungsrichtung davon gedreht wird, und wobei die Nebenachse der Extrudierdüse immer im Wesentlichen senkrecht zur Bewegungsrichtung gehalten wird.

7. Verfahren nach Anspruch 6, bei dem die Extrudierdüse eine Querschnittsform (2) aufweist, die ausgewählt wird unter: einer Ellipse; einer Halbellipse, die durch Schneiden eines Teils der Ellipse entlang einer Linie parallel zur Nebenachse gebildet wird; einem Rhombus; einem Viereck; und einem Dreieck, und die entsprechend der Bewegungsrichtung der Extrudierdüse so gedreht wird, dass eine Nebenachse der Ellipse, eine gerade Linie der Halbellipse, eine kurze diagonale Linie des Rhombus, eine kurze Seite des Viereckes oder eine Basis des Dreieckes immer im Wesentlichen senkrecht zur Bewegungsrichtung gehalten wird.

8. Verfahren nach einem der Ansprüche 1 bis 7, bei dem ein für die Extrudierung der Dichtung angewandter Druck im Bereich von 50 kPa bis 1 MPa liegt.

9. Verfahren nach einem der Ansprüche 1 bis 8, bei dem das Dichtungsmaterial eine Viskosität von 50 bis 1000 Pa·s, gemessen bei einer Formtemperatur der Dichtung, und eine Schergeschwindigkeit von 1,0/s aufweist.

10. Verfahren nach einem der Ansprüche 1 bis 9, bei dem das verwendete Dichtungsmaterial einen Intercept-Wert von (5 Pa)^{1/2} oder größer (entspricht einem Fließwert von 5 Pa oder größer) aufweist, bei dem sich eine Linie, die durch grafische Darstellung einer Ein-Sekunden-Leistung einer Schergeschwindigkeit (s⁻¹) und einer Ein-Sekunden-Leistung einer Scherspannung, während die Schergeschwindigkeit variiert, bei einer Formtemperatur erhalten wird, mit einer Achse der Ein-Sekunden-Leistung der Scherspannung schneidet.

11. Verfahren nach einem der Ansprüche 1 bis 9, bei dem das verwendete Dichtungsmaterial einen Intercept-Wert von (30 Pa)^{1/2} oder größer (entspricht einem Fließwert von 30 Pa oder größer) auf einer Achse der Ein-Sekunden-Leistung der Scherspannung davon aufweist.

12. Verfahren nach einem der Ansprüche 1 bis 9, bei dem das verwendete Dichtungsmaterial einen Intercept-Wert von (70 Pa)^{1/2} oder größer (entspricht einem Fließwert von 70 Pa oder größer) auf einer Achse der Ein-Sekunden-Leistung der Scherspannung davon aufweist.

13. Verfahren nach einem der Ansprüche 1 bis 12, bei dem das Dichtungsmaterial eine Härte von 50° oder niedriger aufweist, gemessen mittels einer Durometer A-Härteprüfung nach JIS K 6253.

14. Verfahren nach einem der Ansprüche 1 bis 13, bei dem das Dichtungsmaterial als eine Hauptkomponente mindestens ein Material enthält, das aus der Gruppe ausgewählt wird, die besteht aus: Urethanen; Polymere auf Epoxidbasis; Silikon; Polyisobutylen; hydriertes Polyisobutylen; Polybutadien; hydriertes Polybutadien; fluorhaltige Gummi und deren modifizierten Produkte.

15. Verfahren nach Anspruch 14, bei dem das Dichtungsmaterial ein acrylmodifiziertes Urethan ist.

16. Verfahren nach einem der Ansprüche 1 bis 15, bei dem das Dichtungsmaterial durch Bestrahlen mit einem Aktivierungsenergiestrahl von einer Aktivierungsenergiestrahl-Bestrahlungsvorrichtung (12) ausgehärtet wird.

17. Verfahren nach Anspruch 16, bei dem die Aktivierungsenergiestrahl-Bestrahlungsvorrichtung eine UV-Licht-Bestrahlungsvorrichtung ist und ein Strahlungsausgang davon in Verbindung mit der Extrudierdüse der dreidimensionalen automatischen Beschichtungssteuervorrichtung bewegt wird.

18. Verfahren nach Anspruch 17, bei dem der Strahlungsausgang der UV-Licht-Bestrahlungsvorrichtung um die Extrudierdüse der dreidimensionalen automatischen Beschichtungssteuervorrichtung um den gleichen Winkel gedreht wird wie ein Drehungswinkel der Extrudierdüse gleichzeitig damit.

19. Dichtung für ein Festplattenlaufwerk, hergestellt nach dem Verfahren nach einem der Ansprüche 1 bis 18, die bei einem Festplattenlaufwerk mit einer Abmessung von kleiner als 3,5 in. (88,9 mm) zur Anwendung gebracht wird.

## Revendications

1. Procédé de production d'un joint (4) pour un équipement de disque dur, produit d'une seule pièce avec un élément de couverture par extrusion d'un matériau de joint à partir d'un orifice d'extrusion (7) d'un dispositif automatique tridimensionnel de contrôle du revêtement sur l'élément de couverture, avant de durcir le matériau du joint extrudé, un rapport (h/w) entre une hauteur (h) du joint et une largeur linéaire (w) de celui-ci sur une surface de liaison entre le joint et l'élément de couverture étant compris dans l'intervalle allant de 0,8 à 3,0 dans une partie représentant 80% ou plus du joint, le dispositif automatique tridimensionnel de contrôle du revêtement englobant une extrudeuse du type pneumatique, **caractérisé en ce que**, lorsqu'un logarithme commun x d'une vitesse de cisaillement s⁻¹ et un logarithme commun y d'une viscosité Pa·s du matériau du joint sont représentés par la formule : y = -ax + b, a et b étant des nombres positifs, la valeur de a correspond à 0,3 ou plus ;
dans lequel le matériau du joint est extrudé à partir de l'orifice d'extrusion du dispositif automatique tridimensionnel de contrôle du revêtement pour former un joint de premier étage, le matériau du joint étant ensuite extrudé sur le joint de premier étage pour obtenir un joint à étages multiples.

2. Procédé selon la revendication 1, dans lequel le joint de premier étage est durci après sa formation, mais avant la formation du joint d'étage suivant.

3. Procédé selon la revendication 1, dans lequel le joint à étages multiples englobe un joint à n étages (n étant un entier de 2 ou plus), avec un axe ayant une longueur (wₙ) parallèle à l'élément de couverture, et un joint à (n-1) étages, avec un axe ayant une longueur (wₙ₋₁) parallèle à l'élément de couverture, les longueurs (wₙ) et (wₙ₋₁) satisfaisant une relation représentée par la formule : wₙ₋₁≥wₙ dans une partie représentant 80% ou plus du joint.

4. Procédé selon la revendication 3, dans lequel le joint à étages multiples englobe le joint à n étages (n étant un entier de 2 ou plus), avec un axe ayant une longueur (wₙ) parallèle à l'élément de couverture, et un joint à (n-1) étages, avec un axe ayant une longueur (wₙ₋₁) parallèle à l'élément de couverture, les longueurs (wₙ) et (wₙ₋₁) satisfaisant une relation représentée par la formule : w_{n-1/}wₙ >1,1.

5. Procédé selon la revendication 3, dans lequel le joint à n étages (n étant un entier de 2 ou plus) a une forme quelconque choisie parmi une forme circulaire, une forme semi-circulaire, une forme elliptique ou une forme semi-elliptique en section transversale, un centre d'une section transversale du joint à n étages étant décalé par rapport à un centre d'une section transversale du joint à (n-1) étages, vers l'extérieur par rapport à un centre de l'élément de couverture.

6. Procédé selon la revendication 1, dans lequel le matériau du joint est extrudé en déplaçant l'orifice d'extrusion du dispositif automatique tridimensionnel de contrôle du revêtement le long d'un bord périphérique de l'élément de couverture, l'orifice d'extrusion ayant une forme de section transversale modifiée avec un axe majeur et un axe mineur, et étant tourné en fonction de sa direction de déplacement, l'axe mineur de l'orifice d'extrusion étant toujours maintenu dans un état pratiquement perpendiculaire à la direction de déplacement.

7. Procédé selon la revendication 6, dans lequel l'orifice d'extrusion a une forme de section transversale (2) sélectionnée parmi une ellipse, une semi-ellipse formée en découpant une partie de l'ellipse le long d'une ligne parallèle à l'axe mineur, un losange, un quadrilatère et un triangle, avec une rotation en fonction de la direction de déplacement de l'orifice d'extrusion, de sorte qu'un axe mineur de l'ellipse, une ligne droite de la semi-ellipse, une ligne diagonale courte du losange, un côté court du quadrilatère ou une base du triangle est toujours maintenu dans un état pratiquement perpendiculaire à la direction de déplacement.

8. Procédé selon l'une quelconque des revendications 1 à 7, dans lequel une pression utilisée pour l'extrusion du joint est comprise dans l'intervalle allant de 50 kPa à 1 MPa.

9. Procédé selon l'une quelconque des revendications 1 à 8, dans lequel le matériau du joint a une viscosité comprise entre 50 et 1.000 Pa·s, mesurée en présence d'une température de moulage du joint et d'une vitesse de cisaillement de 1,0/s.

10. Procédé selon l'une quelconque des revendications 1 à 9, dans lequel le matériau du joint utilisé a une valeur d'interception de (5 Pa)^{1/2} ou plus (correspondant à une limite élastique apparente de 5 Pa ou plus), une ligne obtenue par le tracé d'une énergie d'une seconde d'une vitesse de cisaillement (s⁻¹) et d'une énergie d'une seconde d'une contrainte de cisaillement, tout en variant la vitesse de cisaillement en présence d'une température de moulage correspondante, coupe un axe de l'énergie d'une seconde de la contrainte de cisaillement.

11. Procédé selon l'une quelconque des revendications 1 à 9, dans lequel le matériau du joint utilisé a une valeur d'interception de (30 Pa)^{1/2} ou plus (correspondant à une limite élastique apparente de 30 Pa ou plus) sur un axe de l'énergie d'une seconde de la contrainte de cisaillement correspondante.

12. Procédé selon l'une quelconque des revendications 1 à 9, dans lequel le matériau du joint utilisé a une valeur d'interception de (70 Pa)^{1/2} ou plus (correspondant à une limite élastique apparente de 70 Pa ou plus) sur un axe de l'énergie d'une seconde de la contrainte de cisaillement correspondante.

13. Procédé selon l'une quelconque des revendications 1 à 12, dans lequel le matériau du joint a une dureté de 50° ou moins, mesurée par un test de dureté au duromètre de type A selon la norme JIS K 6253.

14. Procédé selon l'une quelconque des revendications 1 à 13, dans lequel le matériau du joint contient, comme composant principal, au moins un matériau sélectionné dans le groupe constitué d'uréthanes, de polymères à base d'époxyde, de silicone, de polyisobutylène, de polyisobutylène hydrogéné, de polybutadiène, de polybutadiène hydrogéné, de caoutchoucs à base de fluor et de produits modifiés de ces matériaux.

15. Procédé selon la revendication 14, dans lequel le matériau du joint est un uréthane à modification acrylique.

16. Procédé selon l'une quelconque des revendications 1 à 15, dans lequel le matériau du joint est durci en l'exposant à l'irradiation de rayons d'énergie d'activation provenant d'un appareil d'irradiation de rayons d'énergie d'activation (12).

17. Procédé selon la revendication 16, dans lequel l'appareil d'irradiation de rayons d'énergie d'activation est un appareil d'irradiation d'une lumière ultraviolette, une sortie d'irradiation étant déplacée en association avec l'orifice d'extrusion du dispositif automatique tridimensionnel de contrôle du revêtement.

18. Procédé selon la revendication 17, dans lequel la sortie d'irradiation de l'appareil d'irradiation de lumière ultraviolette est tournée autour de l'orifice d'extrusion du dispositif automatique tridimensionnel de contrôle du revêtement à un angle identique à un angle de rotation de l'orifice d'extrusion et de manière simultanée avec celui-ci.

19. Joint pour un équipement de disque dur produit par le procédé selon l'une quelconque des revendications 1 à 18, appliqué à un équipement de disque dur d'une taille inférieure à 3,5 pouce (88,9 mm).
